Europäisches Patentamt

European Patent Office

Office européen des brevets

(11) Publication number : **0 516 479 A2**

(12) **EUROPEAN PATENT APPLICATION**

(21) Application number : **92304962.1**

(22) Date of filing : **29.05.92**

(51) Int. Cl.⁵ : **G02F 1/1335,** G02F 1/1333

(30) Priority : **31.05.91 JP 129736/91**

(43) Date of publication of application :
**02.12.92 Bulletin 92/49**

(84) Designated Contracting States :
**DE FR GB**

(71) Applicant : **SHARP KABUSHIKI KAISHA**
**22-22 Nagaike-cho Abeno-ku**
**Osaka 545 (JP)**

(72) Inventor : **Takamatsu, Toshiaki**
**35-4, Sennichi-cho**
**Yamatokoriyama-shi, Nara-ken (JP)**
Inventor : **Hamada, Hiroshi**
**7-177, Aoyama**
**Nara-shi, Nara-ken (JP)**
Inventor : **Nakanishi, Hiroshi**
**2613-1, Ichinomoto-cho**
**Tenri-shi, Nara-ken (JP)**

(74) Representative : **White, Martin David et al**
**MARKS & CLERK 57/60 Lincoln's Inn Fields**
**London WC2A 3LS (GB)**

(54) **A projection-type liquid crystal display apparatus.**

(57)  A projection-type display apparatus which includes a liquid crystal panel (11) including a pair of transmissive substrates (36,37) disposed in a face-to-face relationship, a projecting lens (7) for projecting a source light passing through the liquid crystal panel on a screen (8), a polymer dispersed in liquid crystal (26) disposed between the pair of substrates (36,37), and microlenses (33,34) formed on the liquid crystal panel (11) and disposed corresponding to each pixel in the liquid crystal panel.

Fig. 1

# Fig. 5

## BACKGROUND OF THE INVENTION

### 1. Field of the Invention:

The present invention relates to a projection-type liquid crystal display apparatus requiring no polarizer, and more particularly to a projection-type liquid crystal display apparatus including a liquid crystal panel having a pair of transmissive substrates disposed in a face-to-face relationship, and a projecting lens for projecting a source light passing through the liquid crystal panel.

### 2. Description of the Prior Art:

A 90°-twisted nematic (TN) liquid crystal is known and widely used for the ability to obtain high contrast and the easy time-sharing drive, but it requires the liquid crystal panel to be sandwiched between a pair of polarizers so as to effect optical modulation.

Such a projection-type liquid crystal display apparatus with polarizers can only use a unilateral portion of the polarized light which runs in a direction of polarization inherent to the polarizers. This unavoidably decreases the amount of light. Thus, the image on display becomes dark.

In order to solve the problems mentioned above, there are proposals for dispensing with the use of a polarizer; one example is reported in the article entitled "A Full-Color Projection TV Using LC/Polymer Composite Light Valves" (1989), pages 227-230. This article reports that a liquid crystal polymer composite obtained by dispersing polymer in liquid crystal (polymer dispersed in liquid crystal, hereinafter referred to as "PDLC") is applied to a display apparatus which is used for a projection TV.

When a liquid crystal display using a dynamic scattering (DS) mode without the use of a polarizer or other light scattering type such as PDLC is applied to a projection use, a schlieren optical system is used which is known as means for visually observing the distribution of refraction indexes in a transmissive medium. The schlieren optical system includes a light source, a lens whose aberration is remedied, and a light shield having an opening of a size depending upon a source image.

A projection-type liquid crystal display apparatus using the schlieren optical system is advantageous in making most use of light passing through a transmissive liquid crystal panel, whereas it shuts out light scattering against an opaque liquid crystal. Alternatively, it is possible that the light shielding plate can have a light shield portion of a size corresponding to the source image, and a light transmissive portion which allows light to pass through. In this case, the bright and dark portions of the projected image appear reversely to those in the case described above.

There is another proposal for obtaining a bright display image, characterized in that it uses a combination of a liquid crystal panel and microlenses. Under this system a microlens is provided for each pixel so that the light projected on the pixels can be used without loss. The light is focused by the microlenses and projected on each pixel. This type of liquid crystal display apparatus is disclosed in Japanese Laid-Open Patent Publications Nos. 60-165621 to 60-165624 and 60-262131.

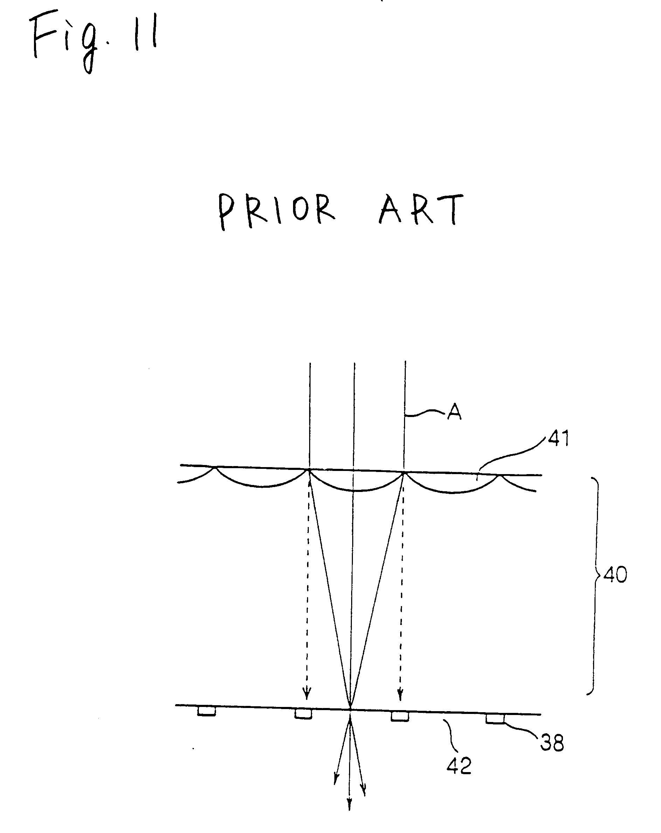

This type of liquid crystal display apparatus secures bright images on display. As shown in Figure **11**, suppose that a source light **A** passing through a plurality of microlenses **41** attached to one surface of a substrate **40** is incident to the substrate **40**. If no microlenses are provided, the light **A** will pass straight through the substrate **40** as indicated by the dotted line, and part of it will be shut out by light shield portions **38** (non-open) and does not participate in the display. In contrast, if microlenses are provided, the light **A** is converged through the microlenses **41** as indicated by the full lines. The light **A** is free from the light shield portions **38** and allowed to pass through the openings **42**. In this way the light **A** is used without loss. The same number of microlenses **41** are provided on both liquid crystal panels corresponding to the pixels of the liquid crystal panel.

However, the display apparatus described above cannot enhance the brightness of a display image beyond a certain limitation. In order to overcome this limitation, there is a proposal for attaching microlenses to a projection-type liquid crystal display apparatus using PDLC. However, the following problems have arisen:

Light is focused by the microlenses **41**, and after passing through the openings **42**, it passes through the liquid crystal phase and then diverges beyond the effective diameter of the projecting lens which projects the light upon a screen. This results in a poor image display which cannot be improved by the single use of the conventional schlieren optical system.

## SUMMARY OF THE INVENTION

The projection-type liquid crystal display apparatus of this invention, comprises a liquid crystal panel including a pair of transmissive substrates disposed in a face-to-face relationship, a projecting lens for projecting a source light passing through the liquid crystal panel on a screen, a polymer dispersed in liquid crystal disposed between the pair of substrates, and microlenses formed on the liquid crystal panel disposed corresponding to each pixel in the liquid crystal panel.

In a preferred embodiment, the microlenses are disposed toward a light source, and a slit means is additionally disposed on an opposite side of the microlenses, the slit means having a pinhole corresponding to each pixel, wherein the focal points of the microlenses are located at the pinholes.

In a preferred embodiment, the microlenses are disposed on both sides of the liquid crystal panel, and wherein the focal length of the microlenses on a side towards the light source is longer than that of the microlenses disposed on an opposite side.

According to another aspect of the present invention, the projection-type display apparatus comprises a plurality of liquid crystal panels disposed at different positions, each panel including a pair of transmissive substrates disposed in a face-to-face relationship, a projecting lens for projecting a source light passing through the liquid crystal panels on a screen as a composite image, a polymer dispersed in liquid crystal disposed between the pair of substrates, and microlenses formed on the liquid crystal panel disposed corresponding to each pixel in the liquid crystal panel.

According to a further aspect of the present invention, the projection-type display apparatus comprising a single crystal panel including a pair of transmissive substrates, a projecting lens for projecting a source light passing through the liquid crystal panel on a screen, a polymer dispersed in liquid crystal disposed between the pair of substrates, microlenses formed on the liquid crystal panel disposed corresponding to each pixel in the liquid crystal panel, and color filters disposed corresponding to each pixel.

Thus, the invention described herein makes possible the objectives (1) of providing a projection-type display apparatus capable of enhancing image brightness to an unprecedented degree, (2) of providing a projection-type display apparatus capable of obtaining high contrast on the projected image, and (3) of providing a projection-type display apparatus capable of obtaining a bright full color image.

## BRIEF DESCRIPTION OF THE DRAWINGS

This invention may be better understood and its numerous objects and advantages will become apparent to those skilled in the art by reference to the accompanying drawings as follows:

Figure 1 is a cross-sectional view showing a three-panel type projection-type liquid crystal display apparatus according to the present invention;

Figure 2 is a schematic side view showing the crystal liquid panels of Figure 1;

Figure 3 is a cross-sectional view showing a side of the substrate having TFTs (thin-film transistors);

Figures 4A and 4B are schematic views illustrating a principle underlying the operation of PDLC;

Figure 5 is a cross-sectional view illustrating the optical system of the liquid crystal panel shown in Figure 1;

Figure 6 is a schematic view showing a projection-type display apparatus of a three-panel type using dichroic prisms;

Figure 7 is a cross-sectional view showing the optical system of the liquid crystal panel used in the projection-type liquid crystal display apparatus of Figure 6;

Figure 8 is a cross-sectional view showing a projection-type liquid crystal display apparatus of a single-panel type;

Figure 9 is a cross-sectional view showing the optical system of the liquid crystal panel used in the projection-type liquid crystal display apparatus of Figure 8;

Figure 10 is a cross-sectional view showing another example of a projection-type liquid crystal display apparatus of a single panel type; and

Figure 11 is a schematic view showing the structure of a liquid crystal panel used in the conventional projection-type liquid crystal display apparatus.

## DESCRIPTION OF THE PREFERRED EMBODIMENTS

### Example 1

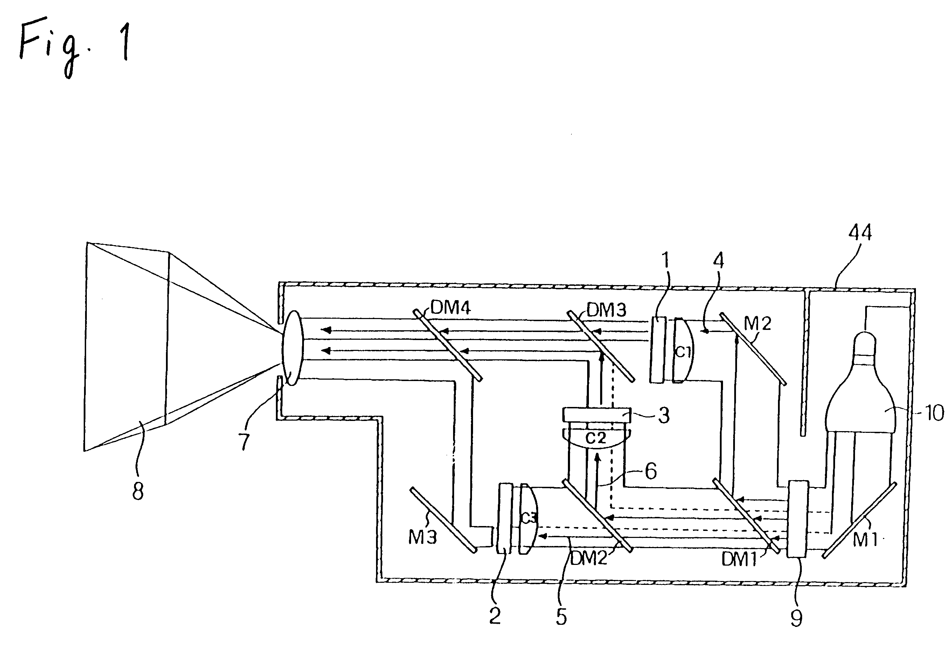

Referring to Figure 1, an exemplary projection-type liquid crystal display apparatus of a three-panel type will be described:

A box-shaped casing 44 is provided with a lamp (light source) 10 whose light is wholly reflected upon a totally-reflecting mirror M1 and passes through a filter 9. Ultra-violet and infrared ray portions of the light are removed, and separated into red, green and blue color components 4, 5 and 6 by dichroic mirrors DM1 and DM2. The red color component 4 separated by the dichroic mirror DM1 is wholly reflected upon a totally-reflecting mirror M2 and projected on the liquid crystal panel component 1 through a condenser lens C1.

The green color component 5 is projected on a liquid crystal panel component 2 through a condenser lens C3 and the blue color component 6 is projected on a liquid crystal panel component 3 through a condenser lens C2.

After they pass through the respective condenser lenses C1 to C3, the three color components 4, 5, and 6 are projected upon microlenses 33 arranged on the back of a glass substrate 36 (hereinafter referred to as "TFT side"), which are liquid crystal panel components 1, 2, and 3, hereinafter referred to as "liquid crystal panel 11". The microlenses 33 focus the color components 4 to 6 which are projected onto a screen 8 through a projecting lens 7 after passing through the respective pixels. In this way, an intended image is reproduced in response to image signals of color components 4 to 6.

The three-panel type liquid crystal display apparatus can compose color components 4, 5, and 6 by the dichroic mirrors **DM3** and **DM4** to form a full-color image on the screen **8**.

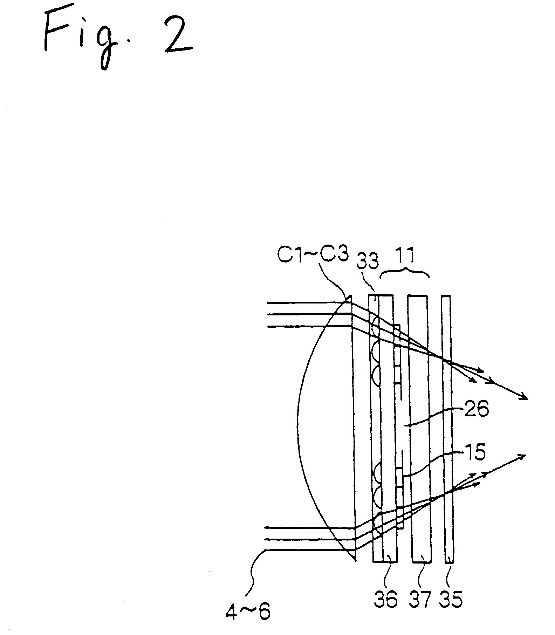

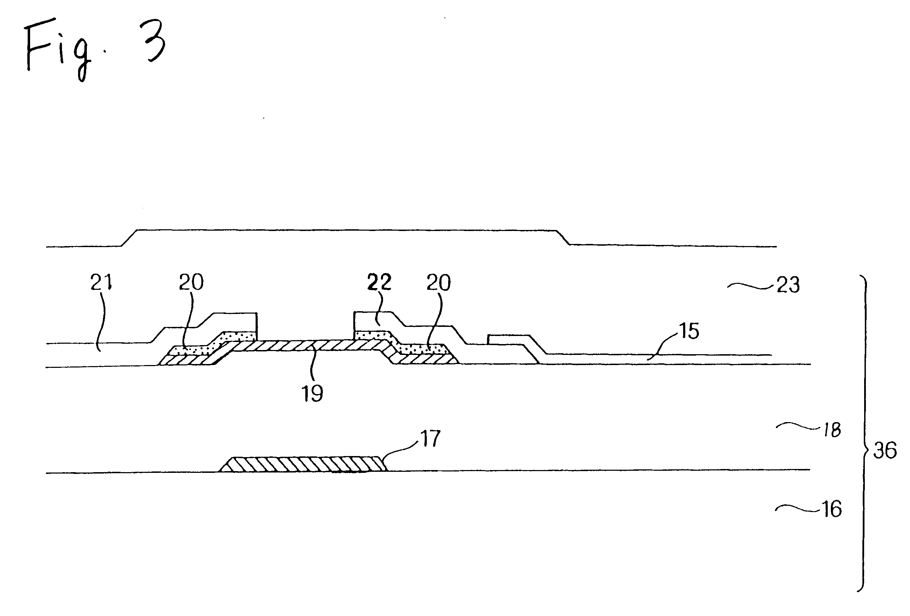

Referring to Figure **2**, the exemplary liquid crystal panel **11** includes the TFT side **36** and a counterpart side **37**. The TFT side **36** is provided with pixel electrodes **15** toward the counterpart side **37**. The reference numeral **26** denotes a PDLC which is sandwiched between the TFT side **36** and the counterpart side **37**.

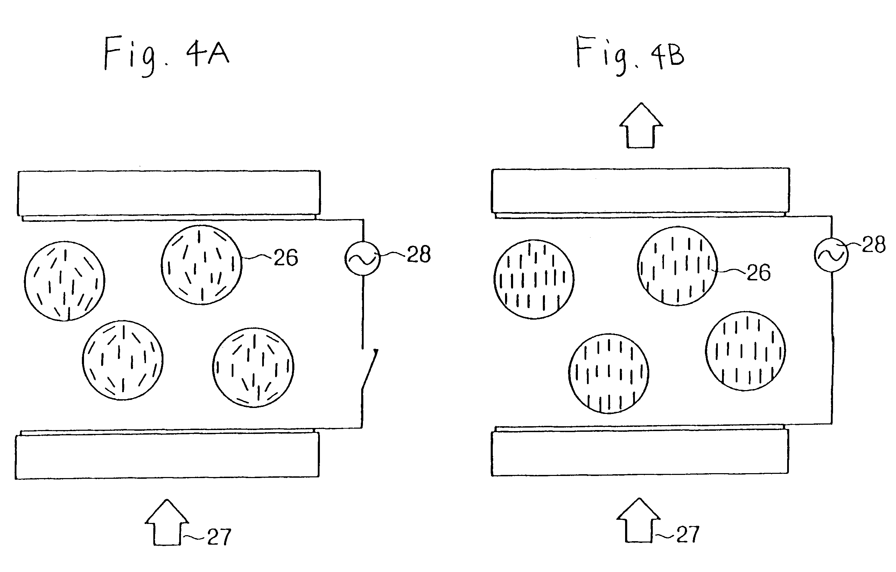

Referring to Figure **3**, a gate electrode **17** is formed on a glass substrate **16**, and covered with a gate insulating layer **18** on which amorphous silicon (a-Si) layer **19** is formed in pattern. On the amorphous silicon layer **19** is formed an amorphous silicon ($n^+$-Si) layer **20** on which a source electrode **21** and a drain electrode **22** are formed. These electrodes **21** and **22** are covered with a protective layer **23**.

Figures **4A** and **4B** show different states of molecular orientation of the PDLC **26**; one state is where voltage is not applied to the PDLC **26** (Figure **4A**), and the other is where voltage is applied thereto to form an electric field (Figure **4B**). As is evident from Figure **4B**, the PDLC **26** is selected so as to ensure that the refractive index $n_0$ of the reorientated liquid crystal is equal to the refractive index $n_p$ of the liquid crystal polymer. As a result, the PDLC **26** allows the incident light **27** to pass therethrough.

In the state shown in Figure **4A** where no voltage is applied, the liquid crystal molecules of the PDLC **26** are orientated along the interface thereof. At this stage the PDLC **26** has a different refractive index from that of the liquid crystal polymer. As a result, the incident light **27** is scattered, that is, it is repeatedly refracted in the interface between the PDLC **26** and the liquid crystal polymer.

The PDLC **26** and the liquid crystal panel **11** will be fabricated in the following manner:

Polymerizing resins can be obtained by sensitizing gelatin, casein, fish glue, and polyvinyl alcohol-stilbenesol with the addition of dichromate or alternatively polyvinyl alcohol or acrylic photopolymer can be used. In general, there are two kinds of liquid crystal material; one having positive induced anisotropy and the other having negative induced anisotropy. The one having positive induced anisotropy is preferable because of its greater transmittivity which enables the display apparatus to operate at a low voltage.

Liquid crystal material usable in the present invention can be cyanobiphenyl-base, cyanoterphenyl-base, cyanophenylcyclohexane-base, phenylpyrimidine-base, or cyanohexylphenylpyrimidine-base nematic liquid crystal or mixed crystal thereof.

As a first step, difunctional acrylate ("HX-620" manufactured by Nippon Kayaku K.K.) as a polymerizing photopolymer, a nematic liquid crystal having positive induced anisotropy ("ZLI-1565" manufactured by Merck Inc.) and a polymerization initiator ("Darocure 1173" manufactured by Merke Inc.) were mixed and filtered. The resulting mixture was spin-coated on a glass substrate to a thickness of about 10 μm. It is possible to apply the mixture either on the TFT side **36** or the counterpart side **37**. In the illustrated embodiment, the mixture was applied to the TFT side **36**. After it was coated, the coated surface was irradiated with ultraviolet rays to form a three-dimensional network. In this way the PDLC **26** was fabricated, and then the TFT side **36** and the counterpart side **37** were joined to form a liquid crystal panel **11**.

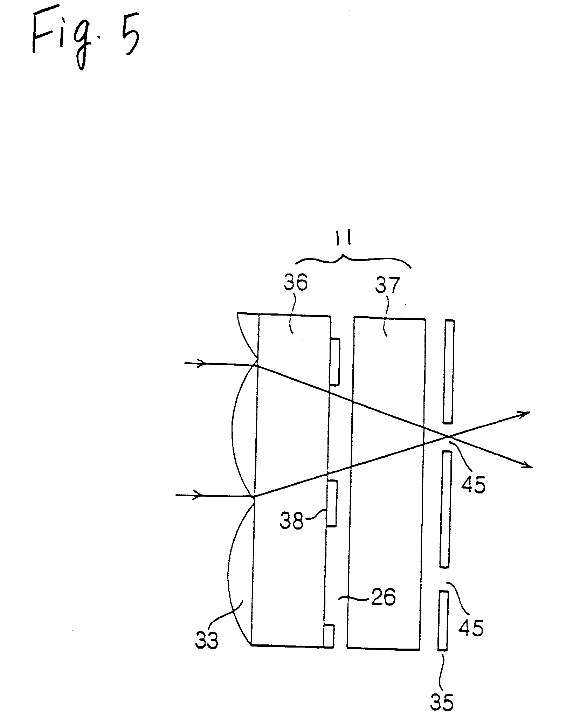

Referring to Figure **5**, an optical system used for the liquid crystal panel **11** includes microlenses **33** on an outer surface of the TFT side **36** and a slit plate **35** having pinholes **45** on an outer surface of the counterpart side **37**. The microlenses **33** and pinholes **45** are prepared in number corresponding to the number of pixels in the liquid crystal panel **11**. The reference numeral **38** denotes a light shield portion. The microlenses **33** can be fabricated in the following various manners:

(1) By molding plastic or glass by use of a mold.

(2) After a sensitized resin is exposed to light in pattern, an unexposed portion of the resin moves to an exposed portion, thereby causing the exposed portion to bulge. These bulges are utilized as a convex lens.

(3) A known thermoplastic resin is patterned by a known photolithographical method, and heated to a temperature beyond a softening temperature of the resin until it becomes fluid. The fluid resin tends to drag at its edges. The dragging tendency is utilized to form a convex lens.

(4) A sensitized resin is subjected to proximity exposure so as to produce a gradient of the amount of optical reaction product in accordance with the degree of shade in the edges of the pattern. This gradient of amount is utilized to form a convex lens.

(5) A light having a strength gradient is applied to a sensitized resin to form a pattern having a refractive index gradient. This refractive index gradient is used as a lens.

(6) By using a selective ion diffusion, a refractive index gradient type lens is obtained.

(7) Light is applied to a sensitized glass so as to utilize contraction which occurs when the resin is crystallized.

As an example, the method (6) will be described but of course the other methods can be selectively used:

Referring to Figure **5**, the microlenses **33** are fabricated on the TFT side **36**, and the positions of the microlenses **33** are predetermined such that their focal lengths can focus an incident light **27** at the pinholes **45** by the microlenses **33**. Under this optical system each pair of pixels and pinholes **45** constitutes a schlieren optical system. When the PDLC **26** is transmissive, the incident light **27** focused by the microlenses **33** pass through the pinholes **45**, and when the PDLC **26** is not transmissive, the incident light **27** is scattered therein, thereby failing to pass through the pinholes **45**.

When the diameter of the pinholes **45** is reduced, the contrast is enhanced. However, if the diameter is excessively reduced, the amount of light is lessened, thereby resulting in a dark image. As shown in Figure **5**, if the microlenses **33** are disposed on the TFT side **36** toward the light source with the slit panel **35** located near to the liquid crystal panel **11**, it is required to set the focal length of the microlenses **33** to be equal to the total thickness including the TFT side **36** and the counterpart side **37**. If a substrate having a thickness of 1.1 mm is used, the focal length of a microlens **33** will be 2.2 mm. In the illustrated embodiment, the intervals between one microlens and the next is 200 μm. The diameter of each pinhole **45** is preferably in the range of 10 μm to 20 μm. If the size of the pinholes **45** is in this range, sufficient brightness is obtained, and, as compared with known liquid crystals having openings of ordinary size, contrast is considerably enhanced.

Example 2

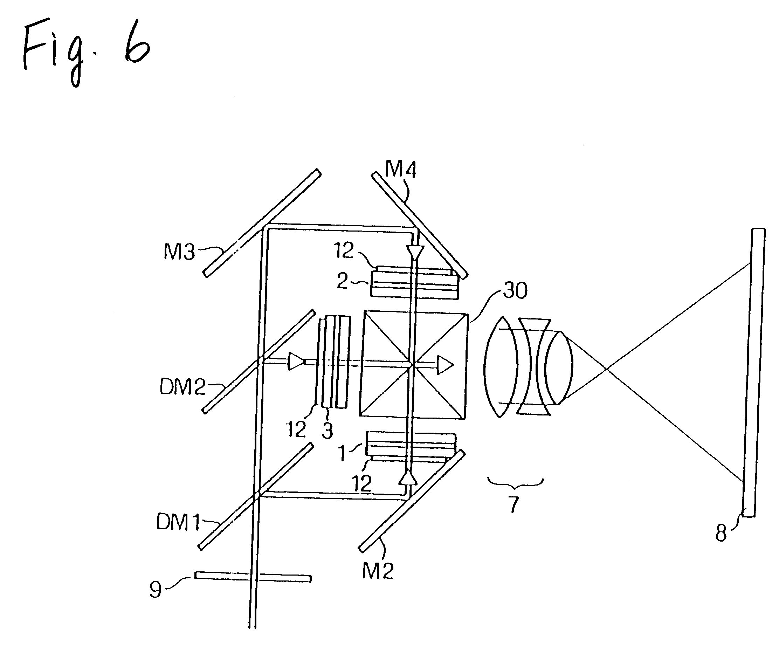

Referring to Figure 6, a second example of the embodiment will be described:

This example is different from Example 1 in that a single dichroic prism **30** is used to compose color component **4**, **5**, and **6** instead of the three dichroic mirror **DM2**, **DM3**, and **DM4** which are used in Example 1. The resulting full color image is projected onto the screen **8**.

More specifically, a light from a lamp is led to dichroic mirrors **DM1** and **DM2** so as to be separated into color light components **4**, **5**, and **6**. The red color component **4** through the **DM1** is led to the liquid crystal panel component **1** reflected upon the totally-reflecting mirror **M2**. The blue color component **6** through the dichroic mirror **DM2** is projected upon the liquid crystal panel component **3**. The green color component **5** through the dichroic mirror **DM2** is reflected upon the totally-reflecting mirrors **M3** and **M4**, and projected upon the liquid crystal panel component **2**. The color components **4**, **5**, and **6** through the liquid crystal panel components **1**, **2**, and **3** are composed by the dichroic prism **30**, and the composite color image is projected onto the screen **8** through the projecting lens **7**.

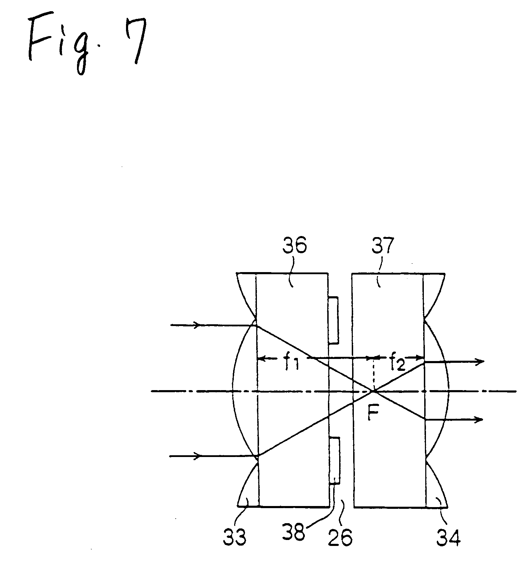

The liquid crystal panel components **1**, **2**, and **3** are fabricated in the same manner as described above, except that the microlenses **33** and **34** are provided on both surfaces of the liquid crystal panel **11** as shown in Figure 7. The TFT side **36** and the counterpart side **37** are respectively made of glass to the same thickness.

The focal lengths of the microlenses **33** and **34** are determined to be $f_1$ and $f_2$ wherein the focal length $f_1$ is longer than the focal length $f_2$. In addition, the focus **F** of the microlens **33** is located at the same position with that of the microlens **34** toward the liquid crystal panel **11**. As a preferred embodiment, the focal lengths $f_1$ and $f_2$ of the microlenses **33** and **34** are 1.5 mm and 0.7 mm within the TFT side **36** and the counterpart side **37**, respectively. The thickness of these sides **36** and **37** are 1.1 mm.

When no voltage is applied to the PDLC **26**, an incident light scatters in the interface thereof beyond the effective diameter of the projecting lens **7**. As a result, a reduced amount of light is projected onto the screen **8**. When voltage is applied to the PDLC **26**, an incident light passes through the PDLC **26**, and converged at the focus **F** distant by $f_1$ from the TFT side **36**. The converged light reaches the microlenses **34** whereby it is converted into parallel light rays which are projected onto the screen **8** through the projecting lens **7**.

An advantage of the second example is that light incident to the projecting lens **7** consists of parallel light rays, thereby focusing within the effective diameter thereof. Thus bright images are obtained and contrast is enhanced.

Example 3

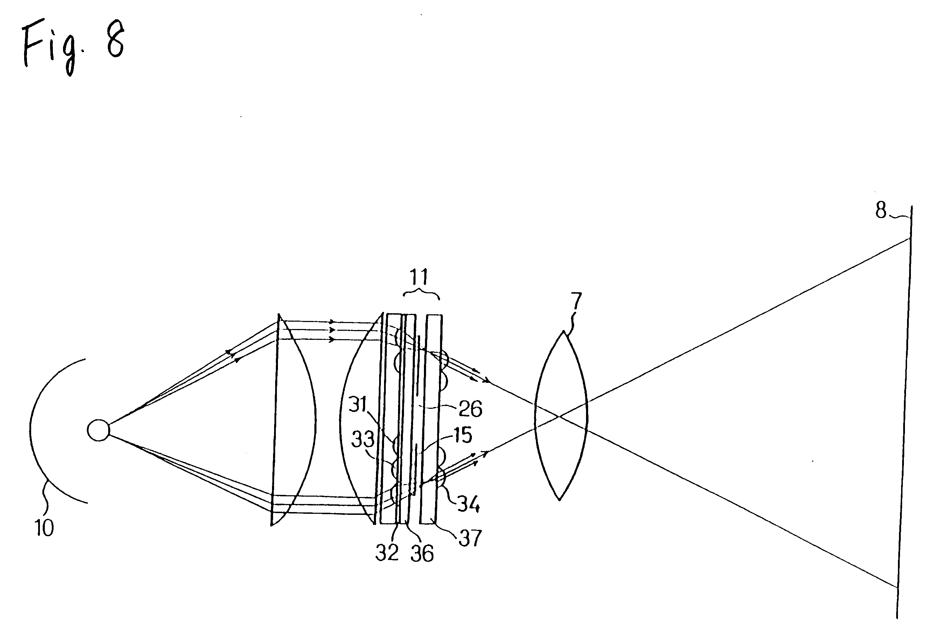

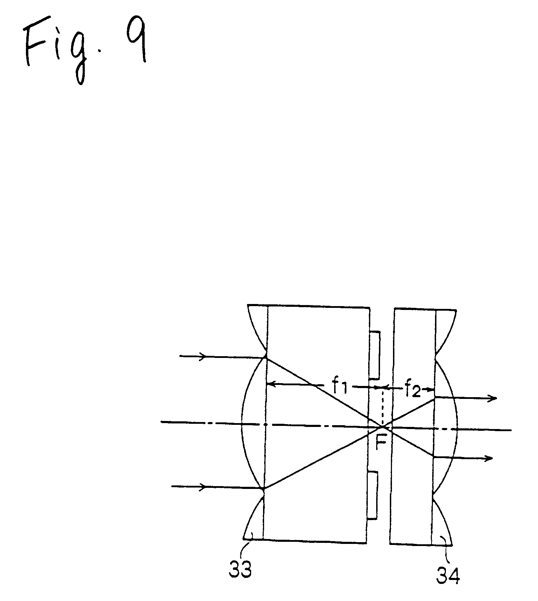

Referring to Figures **8** and **9**, a third example will be described:

Example 3 is characterized by a single-panel system which is composed of a liquid crystal panel **11**, microlenses **33** and **34**, and a color filter **31** of a mosaic type for separating light into red, blue, and green components. The PDLC **26** is disposed between the TFT side **36** and the counterpart side **37**.

For the color filter **31** of a mosaic type, various types of filter can be used; for example, a pigment dispersing type, and an interference color filter having two kinds of stacked transmissive dielectric layers. It is necessary to stack these layers so as to precisely correspond to each pixel of the liquid crystal panel **11**. Ultra-violet sensitive resin **32** is used as a bonding medium.

The liquid crystal panel used in Example 3 is fabricated in the following manner:

In fabricating the liquid crystal panel, copolymer ("Photorex RW-201" manufactured by Sekisui Fine Chemical Inc.) which consisted of 2-hydroxyethyl-methacrylate (HEMA), dimethylaminopropylmethacrylate (DMAPMA), and methacrylamide, the copolymer being disclosed in Japanese Laid-Open Patent Publication No. 58-199342. The acrylate, nematic liquid crystal ("ZLI-1565" manufactured by Merke Inc.) and diazo compounds as a polymerization initiator are mixed. The mixture is filtered and spin-coated on a glass substrate, wherein the mixture is applied to the TFT side **36** in the same manner as in Example 1. Then, the coated liquid crystal panel is irradiated with ultraviolet rays to form a dimensional network. After the PDLC **26** is formed, the counterpart side **37** is attached thereto.

In the method described above, the mixture of liquid crystal and photopolymer is previously coated on the TFT side **36**, and the coated TFT side **36** is irradiated with ultraviolet rays to form the PDLC **26**. Alternatively, it is possible to attach the counterpart side **37** to the TFT side **36** first, and then the mixture is poured at vacuum into the liquid crystal panel **11**, followed by the irradiation of ultraviolet rays. In this way a three-dimensional network of photopolymer is formed.

In Example 3, the microlenses **33** and **34** are fabricated by the selective ion diffusion method (6) listed above, and the TFT side **36** and the counterpart side **37** are different in thickness as shown in Figure **9**. The focal lengths of the microlenses **33** and **34** are 1.1 mm ($f_1$) and 0.7 mm ($f_2$) within the respective sides **36 and 37**. The thicknesses of the sides **36** and **37** are 1.1 mm and 0.7 mm so as to be equal to the focal lengths $f_1$ and $f_2$. Description of portions and parts indicated by like numerals corresponding to those in Examples 1 and 2 are omitted for simplicity.

In Example 3, parallel light rays through the liquid crystal panel **11** are projected onto the screen **8** through the projecting lens **7**. The light is projected upon the screen **8** without scattering, thereby securing bright images and enhancing the contrast thereof. In addition, the structure is simplified, and the production cost is low.

The thickness and the focal length ($f_1$) and ($f_2$) of the microlenses **33** and **34** are not limited to the dimensions mentioned above but can be various. In Example 3 the pixel electrode **15** is externally provided but the color filter **31** can be internally provided.

Example 4

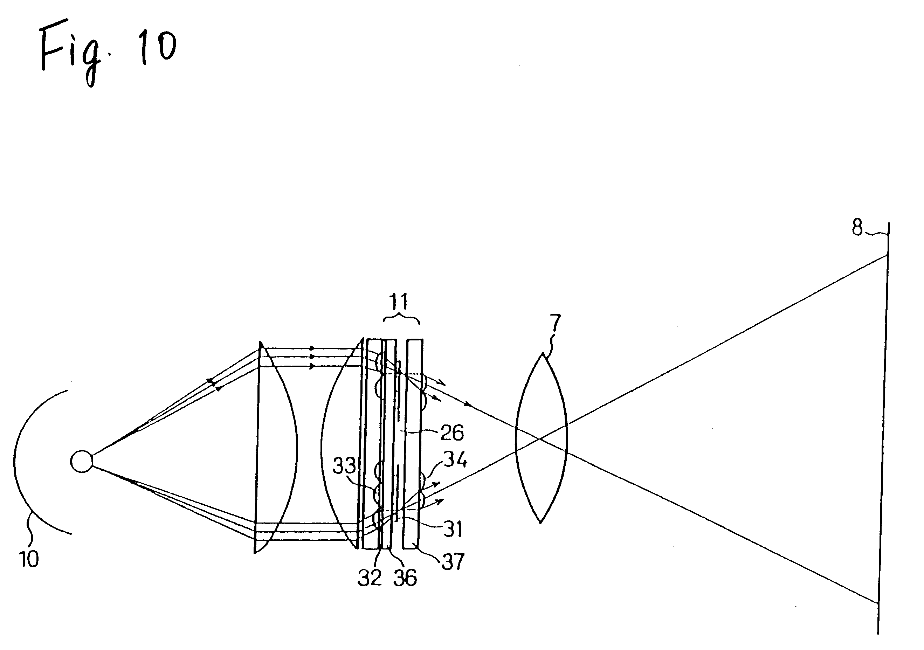

Referring to Figure **10**, a fourth example **4** will be described:

The color filters **31** of a mosaic type corresponding to red, green, and blue for each pixel are formed on the counterpart side **37**, and then the TFT side **36** and the counterpart side **37** are joined. Then the mixture of nematic liquid crystal and photopolymer is poured into the liquid crystal panel **11**. The color filter **31** can be a pigment dispersing type or an interference color filter. The color filter **31** can be made either by the TFT side **36** or the counterpart side **37**. After the mixture is poured, the liquid crystal **11** is irradiated with ultraviolet rays to form a three-dimensional network.

The focal lengths $f_1$ and $f_2$ of the microlenses **33** and **34**, and the thickness of the substrates **36** and **37** are determined so as to be able to enhance the contrast of display.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

**Claims**

1. A projection-type display apparatus comprising:-
a liquid crystal panel (11) including a pair of transmissive substrates (36,37) disposed in a face-to-face relationship; a projecting lens (7) for projecting a source light passing through the liquid crystal panel (11) on a screen (8); a polymer dispersed in liquid crystal (26) disposed between the pair of substrates (36,37) and microlenses (33,34) formed on the liquid crystal panel and disposed corresponding to each pixel in the liquid crystal panel (11).

2. A projection-type display apparatus according to claim 1, wherein the microlenses (33) are disposed toward a light source, and a slit means (35) is additionally disposed on an opposite side of the microlenses, the slit means having a pinhole (45) corresponding to each pixel, wherein the focal points of the microlenses (33) are located at the pinholes (45).

3. A projection-type display apparatus according to claim 1, wherein the microlenses (33,34) are disposed on both sides of the liquid crystal panel (11), and wherein the focal lengths ($f_1$) of the microlenses (33) on a side towards the light source is longer than that of the microlenses (34) disposed on an opposite side.

4. A projection-type display apparatus comprising:-
a plurality of liquid crystal panels (11) disposed at different positions, each panel (11) including a pair of transmissive substrates (36,37) disposed in a face-to-face relationship; a projecting lens (7) for projecting a source light passing through the liquid crystal panels on a screen (8) as a composite image; a polymer dispersed in liquid crystal (26) disposed between each pair of substrates (36,37) and microlenses (33,34) formed on the liquid crystal panel (11) and disposed corresponding to each pixel in the liquid crystal panel.

5. A projection-type display apparatus comprising:-
a single liquid crystal panel (11) including a pair of transmissive substrates (36,37); a projecting lens (7) for projecting a source light passing through the liquid crystal panel (11) on a screen (8), a polymer dispersed in liquid crystal (26) disposed between the pair of substrates (36,37); microlenses (33,34) formed on the liquid crystal panel (11) and disposed corresponding to each pixel in the liquid crystal panel (11), and color filters disposed corresponding to each pixel.

EP 0 516 479 A2

Fig. 1

Fig. 2

EP 0 516 479 A2

# Fig. 3

Fig. 4A

Fig. 4B

Fig. 5

Fig. 6

# Fig. 7

Fig. 8

Fig. 9

Fig. 10

EP 0 516 479 A2

Fig. 11

PRIOR ART